Europäisches Patentamt

European Patent Office

Office européen des brevets

(19)

(11) **EP 1 571 522 A1**

(12) **DEMANDE DE BREVET EUROPEEN**

(43) Date de publication:
**07.09.2005 Bulletin 2005/36**

(51) Int Cl.⁷: **G06F 1/00**, G06F 11/00

(21) Numéro de dépôt: **05003145.9**

(22) Date de dépôt: **15.02.2005**

| | |
|---|---|
| (84) Etats contractants désignés:<br>**AT BE BG CH CY CZ DE DK EE ES FI FR GB GR HU IE IS IT LI LT LU MC NL PL PT RO SE SI SK TR**<br>Etats d'extension désignés:<br>**AL BA HR LV MK YU** | (72) Inventeur: **Pistoulet, Pierre**<br>**94320 Thiais (FR)** |
| (30) Priorité: **02.03.2004 FR 0402159** | (74) Mandataire: **Marchand, André**<br>**OMNIPAT,**<br>**24 Place des Martyrs de la Résistance**<br>**13100 Aix-en-Provence (FR)** |
| (71) Demandeur: **STMicroelectronics S.A.**<br>**92120 Montrouge (FR)** | |

(54) **Dispositif de protection contre l'injection d'erreur dans un bloc logique asynchrone d'un module logique élémentaire**

(57) L'invention concerne un circuit logique comprenant un module logique (10) comprenant un bloc logique fonctionnel (11) fournissant un résultat fonctionnel (R), et une bascule fonctionnelle (12) recevant le résultat fonctionnel (R) et fournissant un résultat synchrone (SR). Selon l'invention, un module (50) de contrôle du bloc logique fonctionnel comprend un bloc logique non fonctionnel (51) exécutant la même fonction logique que le bloc logique fonctionnel et fournissant un résultat non fonctionnel (SR'), des bascules synchrones non fonctionnelles (52) pour appliquer à l'entrée du bloc logique non fonctionnel des données présentes à l'entrée du bloc logique fonctionnel, et des moyens (55) pour comparer le résultat fonctionnel et le résultat non fonctionnel et fournir un premier signal d'erreur (ER3).

**Fig. 10**

EP 1 571 522 A1

**Description**

La présente invention concerne la protection des circuits logiques contre les attaques par injection d'erreur.

Les circuits logiques présents dans les circuits intégrés sécurisés comme les circuits intégrés pour cartes à puce, font l'objet de diverses attaques de la part de fraudeurs qui cherchent à découvrir leur structure et/ou les secrets qu'ils comprennent. Il s'agit par exemple de circuits de cryptographie de type DES, AES, RSA..., de microprocesseurs programmés pour exécuter des algorithmes de cryptographie, de banques de registres contenant des clefs secrètes, etc.

De telles attaques peuvent intervenir pendant des phases de calculs dits sensibles, par exemple pendant les phases de calcul d'un code d'identification, ou pendant la lecture d'une clef de cryptographie dans une mémoire.

Parmi les diverses attaques connues, l'attaque par injection de faute, ou injection d'erreur, est fréquemment utilisée par les fraudeurs. On distingue les attaques localisées, portant sur un ou plusieurs bits, et les attaques de type "tout à 1" ou "tout à 0", qui visent à forcer à une même valeur logique un ensemble de bits en un point déterminé du circuit. Ces attaques peuvent être réalisées en introduisant des perturbations (glitches) dans la tension d'alimentation du circuit, en appliquant un faisceau laser ou un faisceau de rayon X en des points déterminés du circuit, etc. Certaines attaques sont faites sur la face arrière de la microplaquette de silicium du circuit intégré, par application de potentiels électriques déterminés. De telles attaques permettent donc d'observer le comportement du circuit, par exemple la modification d'un code de sortie en fonction de l'attaque, et d'en déduire sa structure.

Pour contrer de telles attaques, on connaît les procédés de sécurisation par redondance logicielle et les procédés de sécurisation par redondance matérielle et vote majoritaire. La redondance logicielle consiste dans le fait de recalculer de façon logicielle le résultat fourni par le circuit logique, le calcul redondant étant effectué par microprocesseur. Toutefois, ce procédé n'offre pas entière satisfaction car le microprocesseur n'est lui-même pas à l'abri d'une injection de faute, notamment dans ses chemins de données et ses banques de registres. De plus, il est souvent impossible d'effectuer certains traitements de données de manière logicielle. Par ailleurs, la redondance matérielle avec élection majoritaire consiste à reproduire en plusieurs exemplaires certaines parties sensibles du circuit logique, et de sélectionner, parmi l'ensemble des résultats fournis par les circuits redondants, le résultat majoritaire. L'inconvénient de ce procédé est qu'il implique une occupation importante de surface de silicium et nécessite la prévision de moyens d'identification et de sélection du résultat majoritaire.

Un objectif général de la présente invention est de prévoir un moyen pour sécuriser un circuit logique contre l'injection de faute, et produire un signal d'erreur lorsqu'une anomalie est détectée.

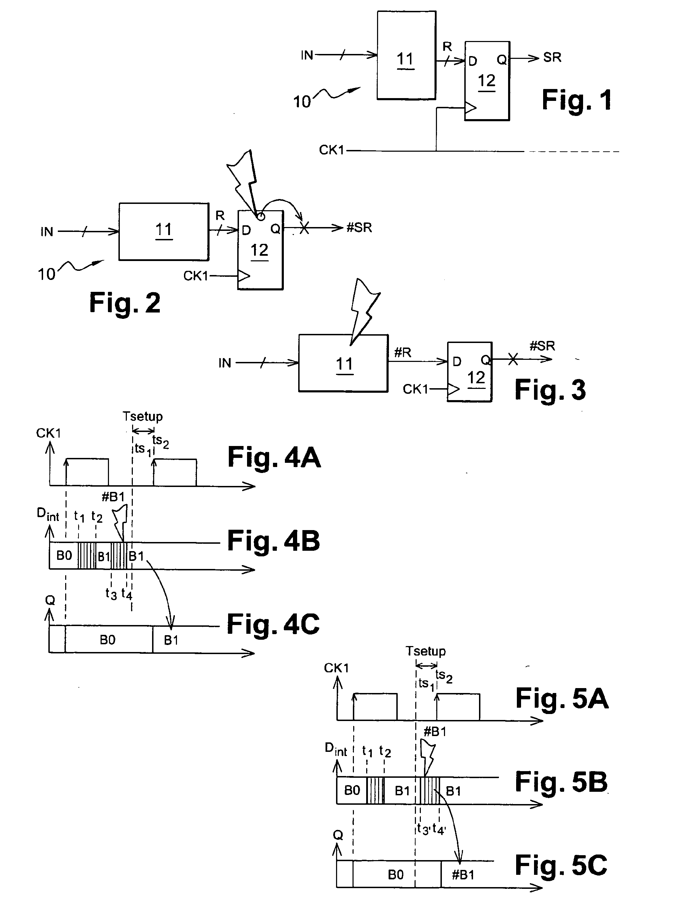

La présente invention repose sur une analyse des mécanismes d'injection de faute qui sera succinctement décrite en relation avec les figures 1 à 5.

La présente invention se fonde sur le postulat selon lequel tout circuit logique séquentiel comprend une juxtaposition de modules logiques élémentaires ayant la même structure générale, illustrée en figure 1. Le module logique élémentaire 10 représenté sur cette figure comprend un bloc logique asynchrone 11 en série avec une bascule synchrone 12, par exemple une bascule flip-flop (ou bascule D). Le bloc logique asynchrone 11 comprend au moins une entrée IN comprenant une pluralité de bits en parallèle, et une sortie fournissant un résultat R=F(IN) sur N bits, F étant la fonction logique exécutée par le bloc 11. La bascule 12, formée par N bascules en parallèle de 1 bit chacune (non représentées), comprend une entrée D de N bits, une sortie Q de N bits et une entrée de synchronisation recevant un signal d'horloge CK0. L'entrée D est reliée à la sortie du bloc 11 et la sortie Q fournit un résultat synchrone SR qui recopie le résultat R à chaque front du signal d'horloge, par exemple à chaque front montant.

Ainsi, selon le postulat de l'invention, tout circuit logique peut se décomposer en une pluralité de modules logiques élémentaires agencés en série et/ou en parallèle, chaque module logique comprenant un bloc logique asynchrone exécutant une fonction logique déterminée. Dans ces conditions, l'entrée IN du bloc logique 11 de la figure 1 est présumée reliée à la sortie Q de la bascule d'un autre module logique élémentaire, et la sortie Q de la bascule 12 est présumée reliée à l'entrée IN du bloc logique asynchrone d'un autre module logique élémentaire. Ce postulat se vérifie dans la plupart des circuits logiques car les recommandations faites par les fournisseurs d'outils de synthèse de code RTL conduisent généralement à l'obtention d'une telle structure de circuit logique, hormis en ce qui concerne les entrées et sorties primaires du circuit logique.

Ainsi, une attaque par injection de faute dans un circuit logique concerne tout ou partie des modules logiques élémentaires qui composent le circuit logique. L'analyse du mécanisme de l'injection de faute et la recherche de solutions peuvent donc, selon l'invention, être ramenées à l'échelle d'un module logique élémentaire. Or, à l'échelle d'un module logique élémentaire, deux possibilités seulement sont envisageables : l'attaque par injection de faute vise la bascule synchrone 12 ou vise le bloc logique asynchrone 11. Chacune des hypothèses d'injection de faute doit donc être considérée indépendamment de l'autre.

La figure 2 illustre une injection de faute dans la bascule synchrone 12. Une telle injection de faute est effectuée sur un noeud interne de la bascule et la sortie Q de la bascule fournit un résultat synchrone erroné #SR. Par exemple, selon une architecture classique de bascule synchrone élémentaire (non représentée), la tension de sortie de la bascule est maintenue par deux portes inverseuses agencée tête-bêche formant un verrou ("latch") et est fournie par un comparateur agencé pour comparer à une tension de seuil la tension présente sur un noeud interne de la bascule. Une attaque sur le noeud interne entraîne l'apparition d'une valeur erronée qui reste conservée dans la bascule par le verrou formé par les portes inverseuses.

La figure 3 représente une injection de faute visant le bloc logique asynchrone 11. L'attaque concerne l'un des noeuds internes au bloc 11 ou plusieurs internes de sorte que le bloc 11 fournit un résultat erroné #R bien que son entrée IN soit réputée valide. Dans ce cas, la relation R=F(IN) n'est plus vérifiée.

Les figures 4A-4C, 5A-5C illustrent deux scénarios distincts d'une injection de faute à entrée de la bascule, due à une injection de faute effectuée dans le bloc logique asynchrone 11 et se retrouvant dans le résultat R. Les figures 4A-4C illustrent le cas d'une injection de faute demeurant sans effet sur le résultat synchrone SR, et les figures 5A-5C illustrent le cas d'une injection de faute ayant un effet sur le résultat synchrone SR. Les figures 4A, 5A représentent le signal d'horloge CK1, les figures 4B, 5B représentent la valeur d'un bit B sur un noeud interne Dint de la bascule, et les figures 3C, 4C représentent la valeur de la sortie Q de la bascule.

La bascule présente une fenêtre de stabilisation Tsetup délimitée par des instants ts1 et ts2, l'instant ts2 correspondant à l'apparition du front montant du signal d'horloge CK1. La valeur du bit B sur le noeud interne Dint, qui est l'image du bit appliqué sur l'entrée D, doit être stable avant l'instant ts1 afin d'être recopiée par la sortie Q au moment où le front montant intervient. Sur les figures 4B, 5B, le noeud interne Dint de la bascule présente une transition de valeur logique au cours de laquelle le bit B passe d'une valeur B0 à une valeur B1. La transition de B0 à B1 se déroule entre des instants t1 et t2. L'instant t2 doit intervenir avant l'instant ts1, qui marque le commencement de la période de stabilisation Tsetup.

Sur la figure 4B, une attaque du noeud interne Dint intervient à un instant t3 et se termine à un instant t4 qui précède l'instant ts1. L'injection de faute impose un bit erroné #B1 sur le noeud Dint, mais se termine avant l'instant ts1, de sorte que le noeud interne Dint repasse à la valeur B1 (imposée par l'entrée D) avant la phase critique Tsetup. Ainsi, comme représenté sur la figure 3C, l'injection de faute demeure sans effet car c'est le bit B1 qui est recopié par la sortie Q de la bascule à l'instant ts2.

Sur la figure 5B, une injection de faute #B1 sur le noeud Dint intervient au contraire entre deux instants t3' et t4' se trouvant à l'intérieur de la fenêtre Tsetup. Dans ce cas, c'est le bit erroné #B1 qui est recopié par la sortie Q à l'instant ts2, comme représenté en figure 4C. L'injection de faute est également recopiée en sortie quand t3'<ts1 et t4'>ts1.

On en déduit donc, selon l'invention, qu'une injection de faute dans la bascule 12 peut être détectée en comparant la valeur sur l'entrée D avant le front montant du signal d'horloge et la valeur sur la sortie Q après le front montant du signal d'horloge.

Ainsi, un premier objectif de l'invention est de prévoir un moyen permettant de vérifier l'intégrité d'une bascule synchrone d'un module logique, afin de détecter des attaques par injection de faute dans un noeud interne de la bascule.

On en déduit donc, selon l'invention, qu'une injection de faute visant les noeuds internes du bloc 11 peut être détectée en vérifiant que R=F(IN).

Ainsi, un second objectif de l'invention est de prévoir un moyen permettant de vérifier l'intégrité de la sortie du bloc logique asynchrone d'un module logique, afin de détecter des attaques par injection de faute sur un noeud interne du bloc logique asynchrone.

Un objectif de l'invention est atteint par la prévision d'un circuit logique comprenant au moins un module logique comprenant un bloc logique asynchrone fonctionnel exécutant une fonction logique déterminée et comprenant au moins une entrée de données et une sortie fournissant un résultat fonctionnel comportant plusieurs bits en parallèle, et une bascule synchrone fonctionnelle recevant le résultat fonctionnel et fournissant un résultat synchrone qui recopie le résultat fonctionnel, et un premier module de contrôle de l'intégrité du bloc logique fonctionnel, comprenant : un bloc logique asynchrone non fonctionnel exécutant la même fonction logique que le bloc logique fonctionnel, comprenant au moins une entrée de données et une sortie fournissant un résultat non fonctionnel, des bascules synchrones non fonctionnelles pour appliquer à l'entrée du bloc logique non fonctionnel des données présentes à l'entrée du bloc logique fonctionnel, et des moyens pour comparer le résultat fonctionnel et le résultat non fonctionnel et fournir un premier signal d'erreur ayant une valeur active quand le résultat fonctionnel et le résultat non fonctionnel ne sont pas identiques.

Selon un mode de réalisation, le premier module de contrôle comprend : un premier bloc de codage recevant le résultat synchrone et fournissant un premier code de sortie comprenant un nombre de bits inférieur ou égal au nombre de bits du résultat synchrone, un second bloc de codage recevant le résultat non fonctionnel et fournissant un second code de sortie comprenant un nombre inférieur ou égal au nombre de bits du résultat non fonctionnel, et un comparateur pour comparer le premier code de sortie et le second code de sortie, et fournir le troisième signal d'erreur.

Selon un mode de réalisation, le bloc logique non fonctionnel est un bloc logique réduit qui comprend au moins une entrée réduite et une sortie réduite comprenant chacune un nombre de bits inférieur à l'entrée correspondante et la sortie correspondante du bloc logique fonctionnel, et qui réalise relativement à ses entrées la même fonction logique que le bloc logique fonctionnel, et le premier module de contrôle comprend : au moins un bloc de codage relié en entrée à l'entrée du bloc logique fonctionnel, fournissant un code d'entrée qui est appliqué à l'entrée du bloc logique non fonctionnel par l'intermédiaire des bascules non fonctionnelles, un bloc de codage recevant le résultat synchrone et fournissant un premier code de sortie comprenant un nombre dé bits inférieur ou égal au nombre de bits du résultat synchrone, et un comparateur ayant une entrée recevant le premier code de sortie et une autre entrée reliée à la sortie du bloc logique non fonctionnel, pour fournir le premier signal d'erreur.

Selon un mode de réalisation, le bloc logique non fonctionnel fournit un second code de sortie qui est appliqué au comparateur pour être comparé au premier code de sortie.

Selon un mode de réalisation, le bloc logique non fonctionnel fournit un résultat non fonctionnel qui est appliqué à l'entrée d'un bloc de codage dont la sortie fournit un second code de sortie qui est appliqué au comparateur pour être comparé au premier code de sortie.

Selon un mode de réalisation, le bloc logique fonctionnel comprend au moins une entrée de contrôle recevant un signal de contrôle comprenant un ou plusieurs bits, et le bloc logique non fonctionnel comprend une entrée de contrôle qui reçoit le signal de contrôle par l'intermédiaire d'une bascule synchrone non fonctionnelle.

Selon un mode de réalisation, le circuit logique comprend un deuxième module de contrôle de l'intégrité de la bascule fonctionnelle, comprenant : un premier bloc de codage recevant le résultat fonctionnel et fournissant un premier code d'un nombre de bits inférieur ou égal au nombre de bits du résultat fonctionnel, un second bloc de codage recevant le résultat synchrone et fournissant un deuxième code d'un nombre de bits inférieur ou égal au nombre de bits du résultat synchrone, une bascule synchrone non fonctionnelle recevant le premier code et fournissant un troisième code qui recopie le deuxième code, et un comparateur pour comparer le deuxième code avec le troisième code, et fournir un deuxième signal d'erreur ayant une valeur active quand le deuxième code et le troisième code ne sont pas identiques.

Selon un mode de réalisation, le circuit logique comprend un troisième module de contrôle de l'intégrité de la bascule fonctionnelle, comprenant : un moyen pour fournir au moins un premier bit de référence à partir du résultat fonctionnel, un circuit inverseur pour fournir un premier bit de référence inversé à partir du premier bit de référence, une première bascule synchrone non fonctionnelle recevant le premier bit de référence et fournissant un deuxième bit de référence qui recopie le premier bit de référence, une seconde bascule synchrone non fonctionnelle recevant le premier bit de référence inversé et fournissant un troisième bit de référence qui recopie le premier bit de référence inversé, et un comparateur pour comparer le deuxième bit de référence et le troisième bit de référence et fournir un troisième signal d'erreur ayant une valeur active quand le deuxième bit de référence et le troisième bit de référence sont identiques.

Selon un mode de réalisation, le troisième module de contrôle comprend un premier bloc de codage recevant tout ou partie du résultat fonctionnel et fournissant un code formant le premier bit de référence.

Selon un mode de réalisation, le circuit logique comprend une combinaison du deuxième module de contrôle et du troisième module de contrôle, et une porte logique pour combiner le deuxième signal d'erreur et le troisième signal d'erreur et fournir un signal d'erreur général ayant une valeur active quand au moins le deuxième ou le troisième signal d'erreur a la valeur active.

Selon un mode de réalisation, le moyen pour fournir au moins le bit de référence du troisième module de contrôle est le premier bloc de codage du deuxième module de contrôle.

Selon un mode de réalisation, les blocs de codage sont des circuits fournissant un bit de parité.

Selon un mode de réalisation, les blocs de codage sont des circuits fournissant un code de Hamming.

Selon un mode de réalisation, les bascules fonctionnelles et non fonctionnelles sont pilotées par le même signal d'horloge.

Selon un mode de réalisation, les bascules fonctionnelles sont pilotées par un premier signal d'horloge et les bascules non fonctionnelles sont pilotées par un second signal d'horloge qui est amené jusqu'aux bascules non fonctionnelles par un chemin d'horloge spécifique.

Selon un mode de réalisation, le circuit logique comprend une pluralité de modules logiques, une pluralité de modules de contrôle associés chacun à un module logique, et fournissant chacun un signal d'erreur, et des portes logiques pour rassembler les signaux d'erreur fournis par la pluralité de modules de contrôle, et fournir un signal d'erreur général.

Ces objets, caractéristiques et avantages ainsi que d'autres de la présente invention seront exposés plus en détail dans la description suivante de divers modes de réalisation d'un dispositif de contrôle d'intégrité selon l'invention, faite à titre non limitatif en relation avec les figures jointes parmi lesquelles :

- la figure 1 précédemment décrite représente la structure générale d'un module logique élémentaire de circuit logique,
- la figure 2 précédemment décrite illustre un premier type d'injection de faute dans le module logique élémentaire,

- la figure 3 précédemment décrite illustre un second type d'injection de faute dans le module logique élémentaire,
- les figures 4A à 4C, 5A à 5C précédemment décrites sont des chronogrammes de signaux logiques illustrant deux résultats différents d'une injection de faute du second type,
- la figure 6 représente un premier mode de réalisation d'un module selon l'invention de contrôle de l'intégrité d'une bascule synchrone,
- la figure 7 représente un second mode de réalisation d'un module de contrôle de l'intégrité d'une bascule synchrone,
- la figure 8 représente un module de contrôle de l'intégrité d'une bascule synchrone comprenant des modules de contrôle selon les premier et second modes de réalisation,
- la figure 9 représente schématiquement la structure d'un dispositif de contrôle d'intégrité comprenant une pluralité de modules de contrôle d'intégrité selon l'invention,
- la figure 10 représente un premier mode de réalisation d'un module selon l'invention de contrôle de l'intégrité d'un bloc logique asynchrone,
- la figure 11 représente un second mode de réalisation d'un module de contrôle de l'intégrité d'un bloc logique asynchrone,
- la figure 12 représente un troisième mode de réalisation d'un module de contrôle de l'intégrité d'un bloc logique asynchrone, et
- la figure 13 représente un exemple de réalisation d'un module de contrôle d'intégrité comprenant des modules de contrôle de l'intégrité d'une bascule synchrone et de contrôle de l'intégrité d'un bloc logique asynchrone.

Comme exposé dans ce qui précède, un circuit logique peut se décomposer en une pluralité de modules logiques élémentaires. La présente invention propose d'associer un module de contrôle d'intégrité individuel à chaque module logique élémentaire devant être protégé contre une attaque par injection de faute. Les modules logiques protégés par des modules de contrôle d'intégrité peuvent ne représenter qu'une partie du circuit logique à sécuriser, notamment des parties les plus sensibles à l'injection de faute. Il appartient à l'homme de l'art de déterminer, lors de la conception d'un tel circuit logique, quels sont les modules logiques élémentaires qui doivent être pourvus d'un module de contrôle d'intégrité.

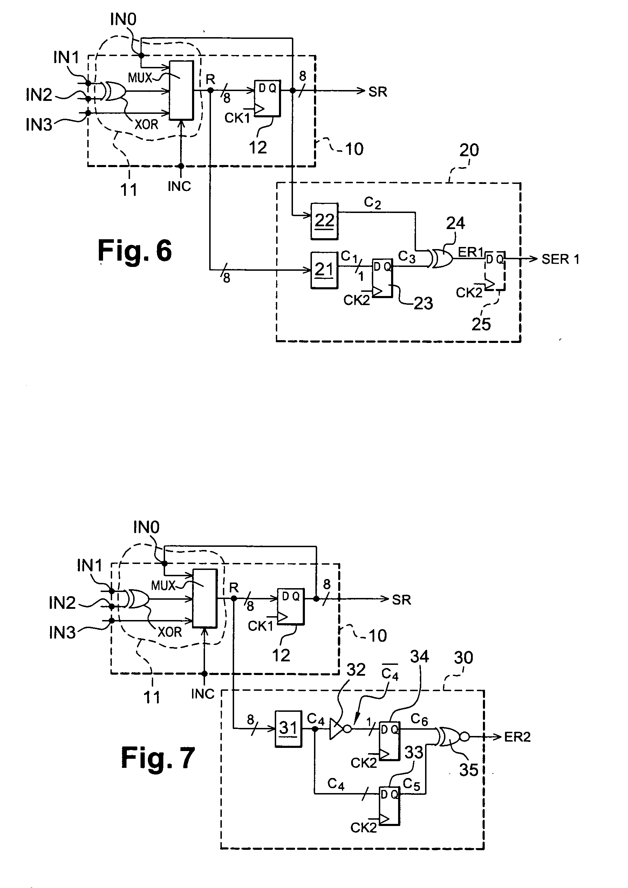

Un exemple de module logique élémentaire 10 est représenté en figure 6 et sera utilisé dans la suite de la description à titre d'exemple d'application de l'invention. Le module 10 est ici un élément de registre volatile prévu pour mémoriser une donnée de 8 bits (octet) et comprend un bloc logique asynchrone 11 fournissant un résultat R de 8 bits, et une bascule synchrone 12 comprenant 8 bascules synchrones élémentaires de 1 bit chacune (non représentées) agencées en parallèle et pilotées par un signal d'horloge CK1. Le résultat R est appliqué à l'entrée D de la bascule 12 dont la sortie Q fournit un résultat synchrone SR. Le bloc 11 comprend ici un multiplexeur MUX et une porte XOR (Ou Exclusif) et présente quatre entrées de données IN0, IN1, IN2, IN3 de 8 bits chacune, et une entrée de contrôle INC de 2 bits. Le multiplexeur MUX présente une première entrée de données de 8 bits formant l'entrée IN0 du bloc 11, une deuxième entrée de données reliée à la sortie de la porte XOR, une troisième entrée de données formant l'entrée IN3 du bloc ainsi qu'une entrée de contrôle formant l'entrée de contrôle INC du bloc 11. La porte XOR, formée par 8 portes XOR élémentaires ayant chacune deux entrées de 1 bit (non représentées), comprend une entrée de 8 bits formant l'entrée IN1 du bloc 11 et une entrée de 8 bits formant l'entrée IN2 du bloc 11. La sortie de la porte XOR fournit au multiplexeur un mot de 8 bits de données dont chaque bit est le résultat de la combinaison bit à bit des bits de même rang présents sur chacune des entrées de la porte XOR. La première entrée du multiplexeur formant l'entrée IN0 du bloc est reliée à la sortie Q de la bascule 12, et reçoit le résultat SR. Cette entrée reliée à la sortie du module logique 10 permet de rafraîchir la valeur du registre volatile à chaque cycle d'horloge, lorsque aucune nouvelle donnée n'y est enregistrée. Ainsi, le résultat R fournit par le bloc logique 11 ainsi que le résultat synchrone en sortie du module 10 dépendent des bits appliqués à l'entrée de contrôle INC et peuvent être égaux au mot présent sur l'entrée IN0, au mot fourni par la porte XOR (combinaison bit à bit par la fonction XOR des entrées IN1, IN2) ou au mot présent sur l'entrée IN3.

On décrira maintenant des exemples de réalisation d'un module de contrôle de l'intégrité de la bascule synchrone 12, puis des exemples de réalisation d'un module de contrôle de l'intégrité du bloc logique asynchrone 11.

Dans ce qui suit, de tels modules de contrôle d'intégrité selon l'invention seront appelés "modules de contrôle", étant étendu que le contrôle en question est un contrôle d'intégrité. Par ailleurs, les éléments d'un module logique élémentaire et des éléments d'un module de contrôle seront respectivement appelés éléments "fonctionnels" et éléments "non fonctionnels" afin de les distinguer. Les termes "fonctionnel" ou "non fonctionnel" signifient seulement que l'élément concerné appartient à un module logique élémentaire à contrôler ou à un module de contrôle associé au module logique élémentaire. Ainsi, les éléments constitutifs du module 10 décrit ci-dessus, formant un élément de registre, sont tous des éléments fonctionnels.

**Exemples de réalisation de modules de contrôle de la bascule synchrone**

**Premier mode de réalisation**

La figure 6 représente, en sus du module 10, un module de contrôle 20 selon l'invention, destiné à détecter les attaques par injection de faute dans la bascule fonctionnelle 12 du module 10.

Le module 20 comprend deux blocs de codage 21, 22, une bascule synchrone non fonctionnelle 23 pilotée par un signal d'horloge CK2, un comparateur 24 à deux entrées et, optionnellement, une bascule synchrone non fonctionnelle 25 représentée en traits pointillés, également pilotée par le signal CK2.

Les blocs de codage 21 et 22 reçoivent en entrée, respectivement, le résultat R fourni par le bloc logique asynchrone 11 et le résultat synchrone SR fourni par la bascule synchrone 12. Ils fournissent respectivement un code C1 et un code C2, ici des codes de 1 bit chacun. Les codes C1, C2 sont par exemple des codes de parité. Dans ce cas, chaque bloc de codage 21, 22 comprend un arbre de portes XOR (non représenté). Par exemple, le bloc 21 comprend une première porte XOR recevant deux premiers bits du résultat R, une deuxième porte XOR recevant le troisième bit du résultat R et la sortie de la première porte XOR, une troisième porte XOR recevant le quatrième bit du résultat R et la sortie de la deuxième porte XOR, et ainsi de suite. Le code C1 est alors un bit de parité égal à :

$$C1 = r0 \oplus r1 \oplus r2 \oplus r3... \oplus r7$$

r0-r7 étant les bits du résultat R, C1 étant égal à 1 si le résultat R contient un nombre impair de bits à 1.

Le code C1 est appliqué sur une entrée D de la bascule non fonctionnelle 23, dont la sortie Q fournit un code C3. Les codes C1, C3 sont appliqués aux entrées du comparateur 24. Le comparateur 24, par exemple une porte XOR, fournit un signal d'erreur ER1 qui est à 0 quand les deux codes sont égaux et est à 1 (valeur active) quand les deux codes sont différents. La bascule 25 reçoit le signal d'erreur ER1 et fournit un signal d'erreur synchronisé SER1.

Le signal d'horloge CK1 appliqué à la bascule fonctionnelle 12 et le signal d'horloge CK2 appliquée aux bascules non fonctionnelles 23, 25 sont présumés identiques et synchrones, et proviennent d'une même source de signal d'horloge. Toutefois, afin d'assurer une protection supplémentaire contre une injection d'erreurs dans le chemin d'horloge, le chemin amenant le signal CK1 à la bascule fonctionnelle et le chemin amenant le signal CK2 jusqu'aux bascules non fonctionnelles peuvent être différents. Dans ce cas, les chemins d'horloge comprennent des pistes conductrices distinctes connectées à la même source de signal d'horloge et présentent sensiblement les mêmes propriétés temporelles (déphasage entre le signal d'horloge entrant et le signal d'horloge sortant) de sorte que les commutations de bascules fonctionnelles et non fonctionnelles se font sensiblement au même instant, un faible décalage temporel pouvant toutefois être toléré.

Le module 20 permet de détecter une attaque par injection d'erreur dans la bascule fonctionnelle 12, qui affecte le résultat synchrone SR alors que le résultat R appliqué à l'entrée de la bascule 12 est valide. Dans un tel cas, la valeur du résultat SR est différente de celle du résultat R, les codes C1 et C2 sont différents, les codes C2 et C3 sont également différents car le code C3 recopie le code C2. Le signal d'erreur ER1 passe ainsi à 1.

Pour fixer les idées, le tableau 1 ci-après décrit le processus de propagation des signaux dans le module 20 dans le cas d'une injection d'erreur. Dans le tableau 1, la notation suivante est utilisée :

- P est la fonction de codage, par exemple la fonction parité,
- T1 est l'instant où le résultat R est rafraîchi en sortie du bloc 11,
- ta est le temps de calcul des blocs 21, 22 et du comparateur 24 (temps de calcul supposés identiques dans un souci de simplicité)
- T2 est l'instant où apparaît le premier front montant des signaux CK1, CK2 suivant l'instant T1,
- Ti est l'instant où se produit l'injection d'erreur,
- T3 est l'instant où apparaît le front montant suivant des signaux CK1, CK2,
- RVAL est la valeur du résultat R au temps t1, et
- #SRVAL est la valeur erronée du résultat synchrone SR au temps T2, supposée ici différente de RVAL en raison de l'injection d'erreur dans la bascule 12.

Tableau 1

| | T1 | T1+ta | T2 | Ti | T2+ta | T2+2ta | T3 |
|---|---|---|---|---|---|---|---|
| R | RVAL | RVAL | - | - | - | - | - |
| SR | | | SRVAL | #SRVAL | - | - | - |
| C1 | - | P(RVAL) | - | - | - | - | - |
| C3 | | | P(RVAL) | P(RVAL) | P(RVAL) | - | |
| C2 | - | - | - | - | P(#SRVAL) | - | - |
| ER1 | - | - | - | - | - | 1 | - |
| SER1 | - | - | - | - | - | - | 1 |

Les valeurs qui précèdent ou qui suivent les valeurs des signaux figurant dans le tableau 1 ne sont pas mentionnées dans un souci de clarté et ne sont pas utiles à la compréhension de l'exposé. Ces valeurs peuvent être les valeurs courantes du cycle d'horloge considéré, des valeurs du cycle d'horloge précédent ou du cycle d'horloge suivant.

Il apparaît que le signal ER1 passe à 1 à un instant T2+2ta intervenant entre les instants T2 et T3, car les codes C2 et C3 ne sont pas identiques du fait que le résultat synchrone #SRVAL est différent du résultat RVAL. A l'instant T3, le signal d'erreur synchronisé SER1 passe à 1 en sortie de la bascule 25.

La bascule 25 peut être agencée à l'extérieur du module de contrôle et être une bascule de synchronisation collective recevant le résultat de la combinaison de plusieurs signaux d'erreur émis par divers modules de contrôle selon l'invention, comme cela sera décrit pus loin.

**Second mode de réalisation**

La figure 7 représente un second mode de réalisation d'un module de contrôle 30 selon l'invention.

Le module 30 comprend un bloc de codage 31, une porte inverseuse 32, deux bascules 33, 34 pilotées par le signal d'horloge CK2, et un comparateur 35. Le bloc de codage 31 reçoit en entrée le résultat R fourni par le bloc logique asynchrone 11 du module logique 10. La sortie du bloc 31 fournit un bit de référence C4, ici un code de parité de 1 bit. Le bit de référence C4 est appliqué à la porte inverseuse 32 et à une entrée D de la bascule 33. L'entrée D de la bascule 34 est reliée à la sortie de la porte inverseuse 32, qui fournit un bit de référence inversé /C4. Les sorties des bascules 33, 34 fournissent respectivement des bits C5, C6 synchronisés au signal d'horloge CK2 et présumés différents l'un relativement à l'autre puisque le bit C5 est issu du bit C4 tandis que le bit C6 est issu du bit inversé /C4. Les bits C5, C6 sont appliqués en entrée du comparateur 35, ici une porte NXOR (Non Ou Exclusif). Le comparateur fournit un signal d'erreur ER2 qui est égal à 0 quand les bits C5, C6 sont différents, et qui est égal à 1 (valeur active) si les deux bits sont égaux.

Le module 30 permet de détecter une attaque par injection de faute du type "tout à 0" ou "tout à 1". Une telle injection de faute vise l'ensemble des bascules d'une même zone d'un circuit logique. Dans ce cas, les bits C5 et C6 sont égaux et le signal ER2 passe à 1.

L'utilisation en tant que bit de référence, du bit de parité calculé sur l'ensemble des bits du résultat R offre une corrélation élevée entre le bit de référence et le résultat R. Le bit de référence C4 peut toutefois être obtenu de diverses autres manières que celle décrite ci-dessus. Dans une variante de réalisation, le bit de référence est par exemple l'un des bits du résultat R, ou est fourni par une porte logique recevant entrée tout ou partie des bits constituant le résultat R. Plusieurs bits de référence peuvent également être prévus.

**Troisième mode de réalisation**

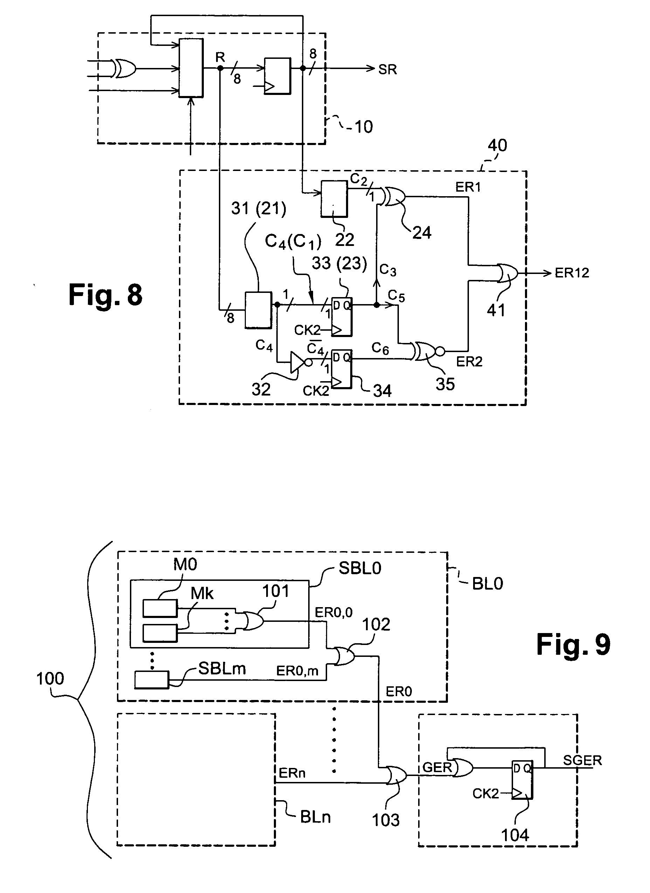

La figure 8 représente un module de contrôle 40 comprenant une combinaison des deux modules de contrôle précédemment décrits. Le module 40 comprend ainsi les éléments du module 30, soit le bloc de codage 31, la porte inverseuse 32, les portes 33, 34, et le comparateur 35 dont la sortie fournit le signal d'erreur ER2. Le module 40 comprend également des éléments du module 20, soit le bloc de codage 22 et le comparateur 24 dont la sortie fournit le signal d'erreur ER1. Le bloc 31 et la bascule 33 sont mis en commun et fournissent à la fois le bit C5 appliqué au comparateur 35 et le code C3 appliqué au comparateur 24 (le bit C5 et le code C3 étant identiques quand les blocs de codage fournissent un bit de parité). Le bloc 40 comprend également une porte OU 41 qui reçoit en entrée les signaux d'erreur ER1, ER2 et fournit un signal d'erreur général ER12. Ainsi, si l'un des deux signaux d'erreur passe à 1 (injection de faute dans la bascule fonctionnelle 12 ou injection de faute par mise à 0 ou à 1 de toutes les bascules), le signal d'erreur général ER12 passe à 1.

La mise en oeuvre de la présente invention dans un circuit logique complexe, par exemple une structure de microprocesseur, une structure de registre, un circuit de cryptographie, comprend la prévision d'un module de contrôle selon l'invention (20, 30 ou 40) pour chaque module logique devant être sécurisé contre l'injection de faute dans le circuit logique.

### Architecture générale d'un dispositif de contrôle d'intégrité selon l'invention

La figure 9 représente très schématiquement l'architecture générale d'un dispositif 100 de contrôle d'intégrité selon l'invention. Le dispositif est organisé en blocs BL0...BLn, chaque bloc comprenant des sous-blocs SBL0...SBLm, chaque sous-bloc comprenant des modules de contrôle M0...Mk , chaque module de contrôle étant associé à un module logique élémentaire du circuit logique à sécuriser (non représenté). Dans chaque sous-bloc SBL0...SBLm, une porte logique OU 101 rassemble les signaux d'erreur individuels issus des modules de contrôle, pour obtenir des signaux d'erreur de sous-bloc ER0,0...ER0,m. Dans chaque bloc BL0...BLm, les signaux d'erreur de sous-blocs ER0,0...ER0,m sont rassemblés par une porte OU 102 qui fournit un signal d'erreur de bloc ER0...ERn. Les signaux d'erreur de bloc sont eux-mêmes rassemblés par des portes OU en cascades schématisées sur la figure par une porte OU 103 à entrées multiples. La sortie de la porte 103 fournit un signal d'erreur général GER appliqué à une bascule synchrone de terminaison 104 qui fournit un signal d'erreur général synchrone SGER. Ce signal d'erreur général peut être utilisé de diverses manières à la portée de l'homme de l'art pour bloquer le circuit logique sous contrôle, notamment pendant l'exécution d'une opération dite sensible. L'homme de l'art est également en mesure de prévoir diverses autres façons de produire le signal d'erreur général à partir des signaux d'erreurs issus de modules de contrôle, et diverses façons de verrouiller ce signal d'erreur général lorsqu'une erreur est détectée au niveau d'un module de contrôle. L'homme de l'art est également en mesure de prévoir les conditions de remise à zéro du signal d'erreur général, par exemple sur remise à zéro (RESET) ou mise hors tension ("power down") du circuit logique.

On a décrit dans ce qui précède un aspect de l'invention visant à détecter une injection d'erreur dans des bascules synchrones fonctionnelles.

On décrira maintenant un second aspect de l'invention qui concerne la détection d'une injection d'erreur dans le bloc logique asynchrone d'un module logique élémentaire.

### Exemples de réalisation d'un module de contrôle du bloc logique asynchrone

### Premier mode de réalisation

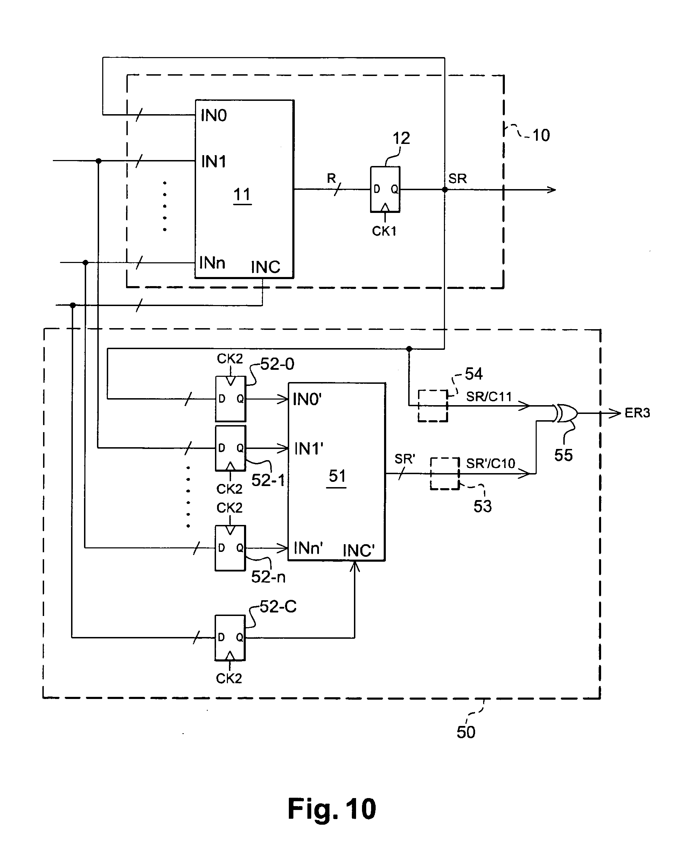

La figure 10 représente un module de contrôle 50 selon l'invention, relié à un module logique 10 comprenant un bloc logique asynchrone 11 et une bascule synchrone 12. La sortie du bloc 11 fournit comme précédemment un résultat R sur l'entrée D de la bascule 12, dont la sortie fournit le résultat synchrone SR. Le bloc 11 comprend ici des entrées de données IN0, IN1...INn et une entrée de contrôle INC. L'entrée IN0 est ici reliée à la sortie Q de la bascule 12, et reçoit le résultat synchrone SR. Les résultats R et SR sont par exemple ici des mots de 8 bits.

Le module 50 comprend un bloc logique non fonctionnel 51 et des bascules synchrones 52-0, 52-1,...52-n, 52-C.

Le bloc logique non fonctionnel 51 est l'image du bloc logique fonctionnel 11 et présente des entrées IN0', IN1'...INn', INC' identiques aux entrées IN0, IN1...INn, INC' du bloc 11. Sa sortie fournit un résultat non fonctionnel synchrone SR' en appliquant la même fonction logique asynchrone que le bloc fonctionnel 11. Les entrées IN0' à INn', INC' sont reliées aux entrées correspondantes du bloc 11 par l'intermédiaire des bascules 52-0, 52-1,...52-n, 52-C. Ainsi, l'entrée IN0' est reliée à l'entrée IN0 par l'intermédiaire de la bascule 52-0, l'entrée IN1' est reliée à l'entrée IN1 par l'intermédiaire de la bascule 52-1, etc., l'entrée INn' est reliée à l'entrée INn par l'intermédiaire de la bascule 52-n, et l'entrée INC' est reliée à l'entrée INC par l'intermédiaire de la bascule 52-C-.

Les bascules non fonctionnelles 52-0 à 52-n, 52-C sont pilotées par le signal d'horloge CK2 décrit plus haut. Chaque bascule 52 comprend un nombre de bascules élémentaires (bascules de 1 bit) égal au nombre de bits que présente l'entrée correspondante du bloc logique non fonctionnel 51.

Le bloc logique non fonctionnel 51 fournit ainsi, avec un décalage de 1 cycle d'horloge, un résultat SR' présumé identique au résultat synchrone SR en sortie de la bascule 12.

Le module 50 comprend également un comparateur 55, par exemple une porte XOR à deux entrées, ici deux entrées de 8 bits chacune, la première entrée recevant le résultat synchrone non fonctionnel SR' et la seconde entrée recevant le résultat synchrone fonctionnel SR. Le comparateur 55 fournit un signal d'erreur ER3 qui est égal à 1 (valeur active) lorsque les résultats SR, SR' sont différents.

Dans une variante de réalisation représentée par des traits pointillés sur la figure, des blocs de codage 53, 54 sont agencés en entrée du comparateur 55. Le bloc de codage 53 reçoit le résultat non fonctionnel SR' et fournit sur la première entrée du comparateur 55 un code C10 qui est fonction de SR', ici un code de 1 bit, par exemple un code de parité. Le bloc 54, identique au bloc 53, reçoit le résultat fonctionnel SR et fournit un code C11, ici de 1 bit, par exemple un code de parité, sur la seconde entrée du comparateur. Dans cette variante, le comparateur 55 est par exemple une porte XOR élémentaire à deux entrées de 1 bit chacune.

Le module 50 permet de détecter une attaque par injection d'erreur dans le bloc logique fonctionnel 11, qui affecte le résultat R alors que les entrées INO-INn, INC sont supposées valides. Dans un tel cas, la valeur du résultat synchrone SR est différente de celle du résultat non fonctionnel R, les codes C10 et C11 sont différents, et le signal d'erreur ER3 passe à 1.

Pour fixer les idées, le tableau 2 ci-après décrit le processus de propagation des signaux dans le module 50 dans le cas d'une injection d'erreur. Dans le tableau 2, la notation suivante est utilisée :

- T1 est l'instant où les entrées IN0 à INn, INC sont rafraîchies,
- I0 à In, IC sont les valeurs des entrées IN0 à INn, INC, à l'instant T1,
- ta est le temps de calcul des blocs asynchrones 11, 51, des blocs de codage 53, 54, et du comparateur 55 (supposés identiques dans un souci de simplicité),
- #RVAL est la valeur erronée du résultat R en sortie du bloc, en raison d'une injection d'erreur dans le bloc 11,
- T2 est l'instant où apparaît le premier front d'horloge CK1, CK2 après l'instant T1,
- RVAL est la valeur non erronée du résultat SR' en sortie du bloc logique non fonctionnel 51,
- P(RVAL) est la valeur du code C10 obtenue à partir de la valeur RVAL,
- P(#RVAL) est la valeur du code C11 obtenue à partir de #RVAL.

**Tableau 2**

|  | T1 | T1+ta | T2 | T2+ta | T2+2ta | T2+3ta |
|---|---|---|---|---|---|---|
| **IN0-INn** | I0-In | I0-In | - | - | - | - |
| **INC** | IC | IC | - | - | - | - |
| **R** | | #RVAL | #RVAL | - | - | - |
| **SR** | - | - | #RVAL | #RVAL | #RVAL | #RVAL |
| **C11** | - | - | - | P(#RVAL) | P(#RVAL) | P(#RVAL) |
| **IN0'-INn'** | - | - | I0-In | I0-In | I0-In | I0-In |
| **INC'** | - | - | IC | IC | IC | IC |
| **SR'** | - | - | - | RVAL | RVAL | RVAL |
| **C10** | - | - | -- | - | P(RVAL) | P(RVAL) |
| **ER3** | - | - | - | - | - | 1 |

Les valeurs qui précèdent ou qui suivent les valeurs indiquées dans le tableau 2, ne sont pas mentionnées dans un souci de clarté et ne sont pas utiles à la compréhension de l'exposé. Ces valeurs peuvent être les valeurs du cycle d'horloge courant, du cycle d'horloge précédent ou du cycle d'horloge suivant.

On voit que le résultat fonctionnel erroné #RVAL, qui apparaît à l'instant T1+ta en sortie du bloc fonctionnel, se propage à la sortie de la bascule fonctionnelle 12 au moment T2 alors qu'au même instant les entrées IN0-INn, INC, qui sont valides, sont échantillonnées par les bascules non fonctionnelles 52-0 à 52-n, 52-C à l'entrée du bloc non fonctionnel 51. Le résultat erroné #RVAL se propage ensuite à la sortie du bloc de codage 54 à T2+ta pour former un code C11 erroné (P(#RVAL)) tandis qu'au même instant le résultat non fonctionnel non erroné RVAL s'établit à la sortie du bloc 51. A l'instant T2+2ta le code C10 s'établit à la sortie du bloc 53 et à l'instant T2+3ta le signal d'erreur ER3 passe à 1.

Comme précédemment, une bascule de synchronisation du signal ER3 peut être agencée à la sortie du comparateur 55.

**Deuxième mode de réalisation**

Ce deuxième mode de réalisation d'un module de contrôle 60 selon l'invention vise une réduction importante de la taille et de l'encombrement du bloc logique non fonctionnel. A cet effet, le bloc logique non fonctionnel 51 décrit ci-dessus est remplacé par un bloc logique réduit 61 qui réalise la même fonction logique que le bloc fonctionnel 11 mais avec un nombre de bits plus faible en entrée et en sortie. Ainsi, le bloc 61 présente des entrées réduites IN0", IN1"...INn" ayant chacune un nombre de bits en parallèle inférieur à celui des entrées IN0, IN1...INn du bloc fonctionnel 11. Le bloc 61 présente néanmoins une entrée de contrôle INC" identique à l'entrée INC du bloc 11, afin de pouvoir réaliser la même fonction logique, car le nombre de bits de commandes ne peut être réduit.

Les entrées réduites sont par exemple des entrées de 1 bit au lieu de 8 bits. Les bascules non fonctionnelles 52-0 à 52-n, 52-C du mode de réalisation précédent, qui étaient des bascules de 8 bits (comprenant chacune 8 bascules élémentaires de 1 bit), sont remplacées par des bascules 62-0 à 62-n de 1 bit chacune, soit des bascules élémentaires, toujours pilotées par le signal d'horloge CK2. La bascule 52-C est conservée car l'entrée de contrôle INC n'est pas réduite.

Le module 60 comprend en outre des blocs de codage 63-0, 63-1,...63-n agencés entre les entrées IN0, IN1,...INC du bloc fonctionnel 11 et les entrées D des bascules 62-0, 62-1,...62-n. Les blocs de codage fournissent des codes d'entrée réduits RC0, RC1...RCn ayant un nombre de bits correspondant au nombre de bits des entrées IN0', IN1'...INn' du bloc logique réduit 61. Ces codes réduits sont ici des codes de 1 bit chacun, par exemple des bits de parité.

Dans ces conditions, la sortie du bloc 61 fournit la transformée des bits de parité RC0, RC1...RCn par la fonction logique du bloc, soit le code de parité de la transformée des entrées non réduites par la fonction logique du bloc. Ainsi, la sortie du bloc 61 fournit directement le code C10 décrit plus haut, qui est appliqué au comparateur 55. Le code C11 est prélevé ici à la sortie du bloc de codage 63-0, qui reçoit ici le résultat synchrone SR (car le résultat synchrone SR du module logique 10 est ramené sur l'entrée fonctionnelle IN0 du bloc logique 11 et est par conséquent également ramené sur le bloc de codage 63-0). Le résultat ER3 est donc identique à celui précédemment décrit (cf. tableau 2). La taille du bloc logique non fonctionnel 61 est ici réduite par 8 relativement à celle du bloc logique non fonctionnel 51.

**Troisième mode de réalisation**

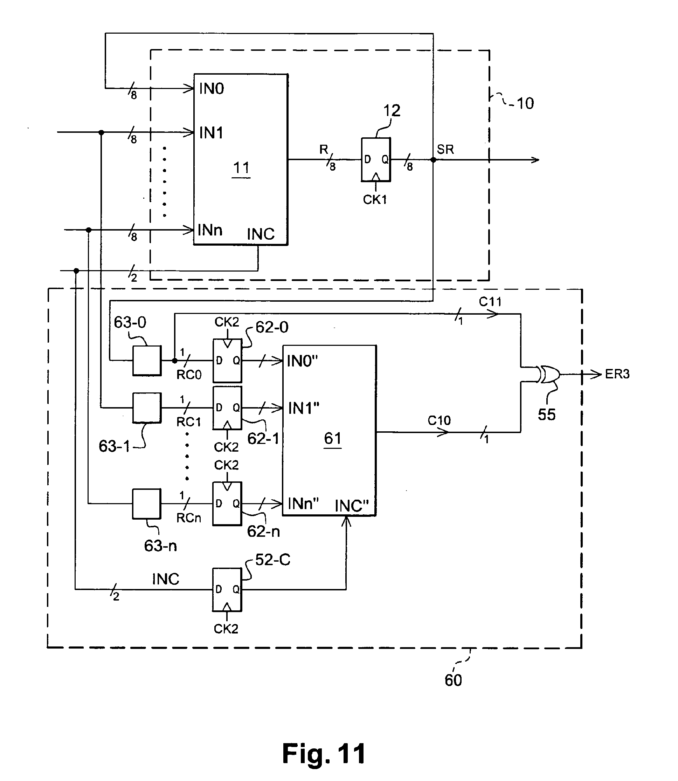

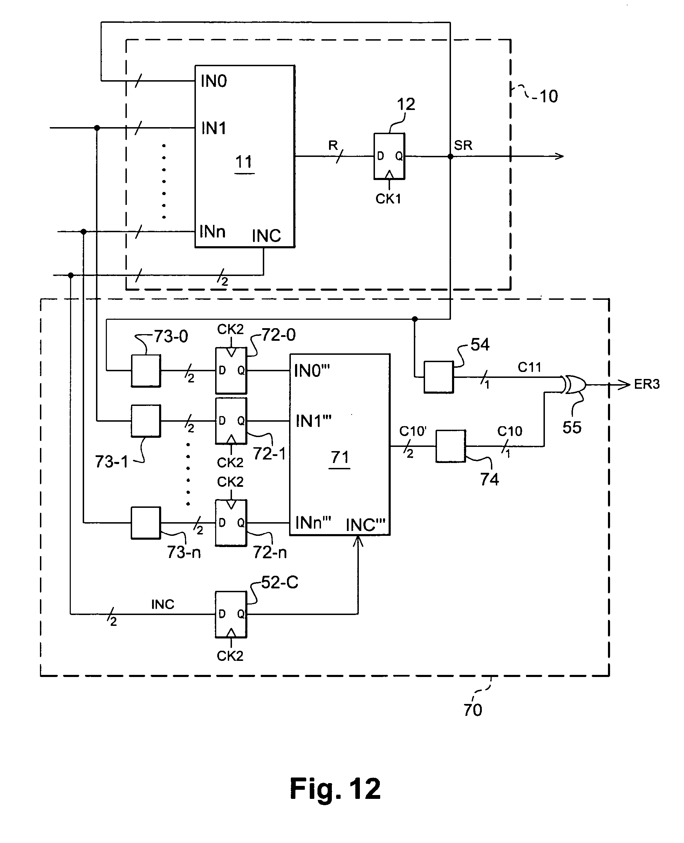

Le module de contrôle 70 représenté en figure 12 est un mode de réalisation intermédiaire entre les deux modes de réalisation précédemment décrits. Il comporte un bloc logique réduit 71 comprenant des entrées IN0''', IN1'''...INn''' présentant chacune un nombre de bits en parallèle qui est supérieur au nombre de bits des entrées IN0", IN1"...INn" du bloc non fonctionnel 61 (fig. 11) mais est inférieur au nombre de bits des entrées IN0, IN1...INn du bloc fonctionnel 11, par exemple 2 bits. Les blocs de codage 63-0 à 63-n sont remplacés par des blocs de codage 73-0 à 73-n fournissant un nombre de bits approprié. Les bascules 62-0 à 62-n sont remplacées par des bascules 72-0 à 72-n capables de recevoir chacune un nombre de bits approprié. La sortie du bloc 71 fournit un code C10' qui comprend un nombre de bits en parallèle supérieur à celui du code C11, qui est à nouveau fourni ici par le bloc de codage 54 précédemment décrit. La sortie du bloc 71 est appliquée à un bloc de codage 74 qui réduit le nombre de bits du code C10' pour fournir le code C10 comportant un nombre de bits identique à celui que comprend le code C11, par exemple 1 bit. Les codes C10, C11 sont appliqués comme précédemment au comparateur 55, pour obtenir le signal d'erreur ER3.

**Synthèse des moyens de l'invention**

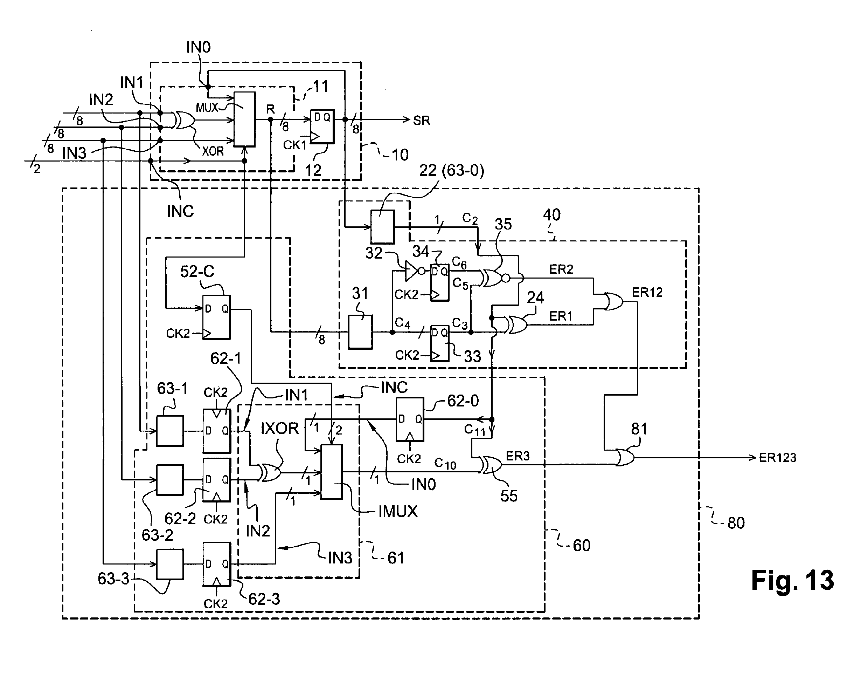

La figure 13 représente un module de contrôle 80 qui représente la combinaison de tous les aspects de l'invention précédemment décrits. Le module 80 est associé ici au module logique élémentaire 10 formant un élément de registre, dont la structure a déjà été décrite. Le bloc logique fonctionnel 11 comprend ainsi le multiplexeur MUX et la porte XOR, le résultat synchrone SR étant ramené sur l'entrée IN0 du multiplexeur.

Le module 80 comprend le module 40 déjà décrit, qui ne sera pas décrit de nouveau, les mêmes éléments étant désignés par les mêmes références. Le module 40 comprend lui-même une combinaison des modules 20, 30 précédemment décrits.

Le module 80 comprend également le module 60 dont la structure générale a également été précédemment décrite. Le bloc logique non fonctionnel 61 du module 60 comprend ici un multiplexeur réduit IMUX ne comprenant que trois entrées de données de 1 bit chacune, et une porte XOR réduite, désignée IXOR, ne comprenant que deux entrées de 1 bit chacune.

Le module 60 comprend également des bascules synchrones non fonctionnelles 62-0, 62-1, 62-2, 62-3 de 1 bit chacune, une bascule synchrone non fonctionnelle 62-C de deux bits, et des blocs de codage 63-1, 63-2, 63-3 ayant 8 bits en entrée et 1 bit en sortie, ici des blocs de calcul de parité (arbres de portes XOR). L'entrée de contrôle de 2 bits du multiplexeur MUX est reliée à l'entrée de contrôle de 2 bits du multiplexeur IMUX par l'intermédiaire de la bascule 62-C. Les entrées IN1, IN2, IN3 de 8 bits du bloc logique fonctionnel 11 sont reliées aux entrées des blocs de codage 63-1, 63-2, 63-3, respectivement. Les sorties des blocs de codage 63-1, 63-2, 63-3, de 1 bit chacune, sont reliées aux entrées correspondantes du bloc non fonctionnel 61 par l'intermédiaire des bascules non fonctionnelles 62-1, 62-2, 62-3, respectivement. Le bloc de codage 22 du module 40 est ici utilisé comme bloc de codage 63-0 du module 60, de sorte que le code C2 du module 40 forme également le code C11 du module 60. Le code C11 est appliqué sur une entrée du comparateur 55 qui reçoit sur son autre entrée la sortie du multiplexeur réduit IMUX, soit le code C10. Le code C11 est également appliqué sur la première entrée du multiplexeur IMUX par l'intermédiaire de la bascule 62-0.

Enfin, le module 80 comprend une porte OU 81 qui reçoit le signal d'erreur ER12 issu du module 40 et le signal d'erreur ER3 du module 60, et qui fournit un signal d'erreur général ER123 qui passe à 1 dès lors qu'une attaque est détectée dans la bascule fonctionnelle 12 et/ou dans le bloc logique fonctionnel 11. Comme indiqué plus haut, ce signal peut être combiné à des signaux d'autres modules pour former un signal de sous-groupe, lui-même combiné à d'autres signaux de sous-groupes pour former des signaux de groupes, etc., jusqu'à obtention d'un signal d'erreur général concernant l'ensemble d'un circuit logique complexe.

Il apparaîtra clairement à l'homme de l'art que la présente invention est susceptible de diverses autres variantes de réalisation. Notamment, les blocs de codage, qui permettent une réduction du nombre de bits pour la comparaison des résultats fonctionnels et non fonctionnels, peuvent être de tout type connu, notamment des blocs de codage fournissant des codes de Hamming qui sont, comme les codes de parité, couramment utilisés dans les procédés de sécurisation de données.

## Revendications

**1.** Circuit logique comprenant au moins un module logique (10) comprenant :

- un bloc logique asynchrone fonctionnel (11) exécutant une fonction logique déterminée et comprenant au moins une entrée de données (IN0-INn) et une sortie fournissant un résultat fonctionnel (R) comportant plusieurs bits en parallèle, et
- une bascule synchrone fonctionnelle (12) recevant le résultat fonctionnel (R) et fournissant un résultat synchrone (SR) qui recopie le résultat fonctionnel (R),

   **caractérisé en ce qu'**il comprend un premier module (50, 60, 70) de contrôle de l'intégrité du bloc logique fonctionnel (11), comprenant :

- un bloc logique asynchrone non fonctionnel (51, 61, 71) exécutant la même fonction logique que le bloc logique fonctionnel, comprenant au moins une entrée de données (INO'-INn', IN0"-INn", IN0'''-INn''') et une sortie fournissant un résultat non fonctionnel (SR', C10, C10'),
- des bascules synchrones non fonctionnelles (52, 62, 72) pour appliquer à l'entrée (IN0'-INn', IN0"-INn", IN0'''-INn''') du bloc logique non fonctionnel des données présentes à l'entrée (IN0-INn) du bloc logique fonctionnel, et
- des moyens (53, 54, 55, 63-0, 74) pour comparer le résultat fonctionnel (R) et le résultat non fonctionnel (SR', C10, C10') et fournir un premier signal d'erreur (ER3) ayant une valeur active quand le résultat fonctionnel et le résultat non fonctionnel ne sont pas identiques.

**2.** Circuit logique selon la revendication 1, dans lequel le premier module de contrôle (50) comprend :

- un premier bloc de codage (54) recevant le résultat synchrone (SR) et fournissant un premier code de sortie (C11) comprenant un nombre de bits inférieur ou égal au nombre de bits du résultat synchrone,
- un second bloc de codage (53) recevant le résultat non fonctionnel (SR', C10') et fournissant un second code de sortie (C10) comprenant un nombre inférieur ou égal au nombre de bits du résultat non fonctionnel, et
- un comparateur (55) pour comparer le premier code de sortie et le second code de sortie, et fournir le troisième signal d'erreur (ER3).

3. Circuit logique selon la revendication 1, dans lequel le bloc logique non fonctionnel est un bloc logique réduit (61, 71) qui comprend au moins une entrée réduite (INO"-INn", IN0'''-INn''') et une sortie réduite comprenant chacune un nombre de bits inférieur à l'entrée correspondante et la sortie correspondante du bloc logique fonctionnel (11), et qui réalise relativement à ses entrées la même fonction logique que le bloc logique fonctionnel, et dans lequel le premier module de contrôle (60, 70) comprend :

- au moins un bloc de codage (63-0 à 63-n, 73-0 à 73-n) relié en entrée à l'entrée (IN0-INn) du bloc logique fonctionnel (11), fournissant un code d'entrée (RCO-RCn) qui est appliqué à l'entrée (IN0"-INn") du bloc logique non fonctionnel (61, 71) par l'intermédiaire des bascules non fonctionnelles(62, 72),
- un bloc de codage (63-0, 54) recevant le résultat synchrone (SR) et fournissant un premier code de sortie (C11) comprenant un nombre de bits inférieur ou égal au nombre de bits du résultat synchrone (SR), et
- un comparateur (55) ayant une entrée recevant le premier code de sortie (C11) et une autre entrée reliée à la sortie du bloc logique non fonctionnel (61, 71), pour fournir le premier signal d'erreur (ER3).

4. Circuit logique selon la revendication 3, dans lequel le bloc logique non fonctionnel (61) fournit un second code de sortie (C10) qui est appliqué au comparateur (55) pour être comparé au premier code de sortie (C11).

5. Circuit logique selon la revendication 3, dans lequel le bloc logique non fonctionnel (71) fournit un résultat non fonctionnel (C10') qui est appliqué à l'entrée d'un bloc de codage (74) dont la sortie fournit un second code de sortie (C10) qui est appliqué au comparateur (55) pour être comparé au premier code de sortie (C11).

6. Circuit logique selon l'une des revendications 1 à 5, dans lequel :

- le bloc logique fonctionnel (11) comprend au moins une entrée de contrôle (INC) recevant un signal de contrôle comprenant un ou plusieurs bits, et
- le bloc logique non fonctionnel comprend une entrée de contrôle (INC', INC", INC''') qui reçoit le signal de contrôle par l'intermédiaire d'une bascule synchrone non fonctionnelle (52-C).

7. Circuit logique selon l'une des revendications 1 à 5, comprenant un deuxième module (20) de contrôle de l'intégrité de la bascule fonctionnelle (12), comprenant :

- un premier bloc de codage (21) recevant le résultat fonctionnel (R) et fournissant un premier code (C1) d'un nombre de bits inférieur ou égal au nombre de bits du résultat fonctionnel (R),
- un second bloc de codage (22) recevant le résultat synchrone (SR) et fournissant un deuxième code (C2) d'un nombre de bits inférieur ou égal au nombre de bits du résultat synchrone,
- une bascule synchrone non fonctionnelle (23) recevant le premier code (C1) et fournissant un troisième code (C3) qui recopie le deuxième code (C2), et
- un comparateur (24) pour comparer le deuxième code (C2) avec le troisième code (C3), et fournir un deuxième signal d'erreur (ER1) ayant une valeur active quand le deuxième code et le troisième code ne sont pas identiques.

8. Circuit logique selon la revendication 7, comprenant un troisième module (30) de contrôle de l'intégrité de la bascule fonctionnelle (12), comprenant :

- un moyen (31) pour fournir au moins un premier bit de référence (C4) à partir du résultat fonctionnel (R),
- un circuit inverseur (32) pour fournir un premier bit de référence inversé (/C4) à partir du premier bit de référence (C4),
- une première bascule synchrone non fonctionnelle (33) recevant le premier bit de référence (C4) et fournissant un deuxième bit de référence (C5) qui recopie le premier bit de référence (C4),
- une seconde bascule synchrone non fonctionnelle (34) recevant le premier bit de référence inversé (/C4) et fournissant un troisième bit de référence (C6) qui recopie le premier bit de référence inversé (/C4), et

- un comparateur (35) pour comparer le deuxième bit de référence (C5) et le troisième bit de référence (C6) et fournir un troisième signal d'erreur (ER2) ayant une valeur active quand le deuxième bit de référence et le troisième bit de référence sont identiques.

9. Circuit logique selon la revendication 8, dans lequel le troisième module de contrôle (30) comprend un premier bloc de codage (31) recevant tout ou partie du résultat fonctionnel (R) et fournissant un code (C1) formant le premier bit de référence.

10. Circuit logique selon l'une des revendications 8 et 9, comprenant une combinaison (40) du deuxième module de contrôle et du troisième module de contrôle, et une porte logique (41) pour combiner le deuxième signal d'erreur (ER1) et le troisième signal d'erreur (ER2) et fournir un signal d'erreur général (ER12) ayant une valeur active quand au moins le deuxième ou le troisième signal d'erreur a la valeur active.

11. Circuit logique selon la revendication 4, dans lequel le moyen (31) pour fournir au moins le bit de référence du troisième module de contrôle (30) est le premier bloc de codage (21) du deuxième module de contrôle (20).

12. Circuit logique selon l'une des revendications 1 à 11, dans lequel les blocs de codage sont des circuits fournissant un bit de parité.

13. Circuit logique selon l'une des revendications 1 à 11, dans lequel les blocs de codage sont des circuits fournissant un code de Hamming.

14. Circuit logique selon l'une des revendications 1 à 13, dans lequel les bascules fonctionnelles et non fonctionnelles sont pilotées par le même signal d'horloge.

15. Circuit logique selon l'une des revendications 1 à 13, dans lequel les bascules fonctionnelles sont pilotées par un premier signal d'horloge (CK1) et les bascules non fonctionnelles sont pilotées par un second signal d'horloge (CK2) qui est amené jusqu'aux bascules non fonctionnelles par un chemin d'horloge spécifique.

16. Circuit logique selon l'une des revendications 1 à 15, comprenant :

- une pluralité de modules logiques,
- une pluralité de modules de contrôle associés chacun à un module logique, et fournissant chacun un signal d'erreur, et
- des portes logiques (102, 103) pour rassembler les signaux d'erreur fournis par la pluralité de modules de contrôle, et fournir un signal d'erreur général.

**Fig. 1**

**Fig. 2**

**Fig. 3**

**Fig. 4A**

**Fig. 4B**

**Fig. 4C**

**Fig. 5A**

**Fig. 5B**

**Fig. 5C**

**Fig. 6**

**Fig. 7**

**Fig. 8**

31 (21)

$C_4(C_1)$

33 (23)

22

24

$C_2$

ER1

$C_3$

$C_5$

SR

$C_4$

$\bar{C_4}$

CK2

41

ER12

32

CK2

34

$C_6$

35

ER2

40

10

**Fig. 9**

M0

Mk

101

SBL0

BL0

ER0,0

102

SBLm

ER0,m

ER0

100

ERn

BLn

103

GER

ER

SGER

CK2

104

**Fig. 10**

**Fig. 11**

**Fig. 12**

Fig. 13

Office européen
des brevets

**RAPPORT DE RECHERCHE EUROPEENNE**

Numéro de la demande

EP 05 00 3145

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 653 708 A (HITACHI LTD) 17 mai 1995 (1995-05-17) * abrégé * * page 1, ligne 24 - ligne 53 * * page 20, ligne 50 - page 21, ligne 30 * * figures 1,2,19,48,49 * ----- | 1,2,6-16 | G06F1/00 G06F11/00 |
| A | US 6 173 416 B1 (LIDDELL DAVID C ET AL) 9 janvier 2001 (2001-01-09) * abrégé * * colonne 1, ligne 35 - colonne 2, ligne 44 * * revendications 1-8 * * figures 12,16 * * colonne 1, ligne 35 - colonne 2, ligne 44 * ----- | 1-16 | |
| A | US 6 161 202 A (MAYER FRANK ET AL) 12 décembre 2000 (2000-12-12) * abrégé * * colonne 3, ligne 56 - colonne 4, ligne 54 * * figures 1,2 * ----- | 1-16 | |

**DOMAINES TECHNIQUES RECHERCHES (Int.Cl.7)**

G06F

Le présent rapport a été établi pour toutes les revendications

| Lieu de la recherche | Date d'achèvement de la recherche | Examinateur |
|---|---|---|
| Munich | 4 mai 2005 | Bichler, M |

EPO FORM 1503 03.82 (P04C02)

**EP 1 571 522 A1**

**ANNEXE AU RAPPORT DE RECHERCHE EUROPEENNE
RELATIF A LA DEMANDE DE BREVET EUROPEEN NO.**                EP 05 00 3145

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-05-2005

| Document brevet cité au rapport de recherche | | Date de publication | Membre(s) de la famille de brevet(s) | | Date de publication |
|---|---|---|---|---|---|
| EP 0653708 | A | 17-05-1995 | JP | 3279004 B2 | 30-04-2002 |
| | | | JP | 7114520 A | 02-05-1995 |
| | | | JP | 3206275 B2 | 10-09-2001 |
| | | | JP | 7234801 A | 05-09-1995 |
| | | | DE | 69425542 D1 | 21-09-2000 |
| | | | DE | 69425542 T2 | 29-03-2001 |
| | | | DE | 69431374 D1 | 17-10-2002 |
| | | | DE | 69431374 T2 | 30-04-2003 |
| | | | DE | 69433468 D1 | 05-02-2004 |
| | | | DE | 69433468 T2 | 24-06-2004 |
| | | | EP | 1016968 A2 | 05-07-2000 |
| | | | EP | 1168178 A2 | 02-01-2002 |
| | | | EP | 0653708 A2 | 17-05-1995 |
| | | | US | 5802266 A | 01-09-1998 |
| | | | CA | 2117936 A1 | 16-04-1995 |
| | | | US | 6513131 B1 | 28-01-2003 |
| | | | US | 6092217 A | 18-07-2000 |
| US 6173416 | B1 | 09-01-2001 | GB | 2268817 A | 19-01-1994 |
| | | | US | 5889940 A | 30-03-1999 |
| | | | US | 5627965 A | 06-05-1997 |
| | | | AT | 162898 T | 15-02-1998 |
| | | | AU | 4713493 A | 14-02-1994 |
| | | | DE | 69316755 D1 | 05-03-1998 |
| | | | DE | 69316755 T2 | 10-09-1998 |
| | | | EP | 0650615 A1 | 03-05-1995 |
| | | | WO | 9402896 A1 | 03-02-1994 |
| | | | JP | 7509088 T | 05-10-1995 |
| | | | US | 6092218 A | 18-07-2000 |
| | | | US | 6134672 A | 17-10-2000 |
| | | | US | 6134679 A | 17-10-2000 |
| | | | US | 6049893 A | 11-04-2000 |
| | | | US | 6047392 A | 04-04-2000 |
| | | | US | 6038684 A | 14-03-2000 |
| | | | US | 6170068 B1 | 02-01-2001 |
| | | | US | 6519704 B1 | 11-02-2003 |
| | | | US | 6141766 A | 31-10-2000 |
| US 6161202 | A | 12-12-2000 | AUCUN | | |

EPO FORM P0460

Pour tout renseignement concernant cette annexe : voir Journal Officiel de l'Office européen des brevets, No.12/82

22